# EUROPÄISCHE PATENTANMELDUNG

(11) **EP 0 675 015 A1**
(43) Veröffentlichungstag der Anmeldung: **04.10.1995**
(21) Anmeldenummer: 94114166.5
(22) Anmeldetag: 08.09.1994
(51) Int. Cl.: B60J 1/00, B60J 10/02

(54) **Vorrichtung zur Einfassung einer Fensterscheibe von Kraftfahrzeugen**

(30) Priorität: 31.03.1994 EP 94105126
(71) Anmelder: HENNIGES ELASTOMER- UND KUNSTSTOFFTECHNIK GMBH & CO KG, D-31547 Rehburg-Loccum (DE)
(72) Erfinder: Kreye, Bernhard, D-31515 Wunstorf (DE)
(74) Vertreter: Wehser, Wulf, Dipl.-Ing.

(57) **Zusammenfassung**

Eine Vorrichtung zum Einfassen der Ränder der Fensterscheiben von Kraftfahrzeugen mit einem aus einem elastischen Material bestehenden Rahmen soll so ausgebildet werden, daß mit ein und derselben Halterung verschiedene Rahmenformen und/oder Rahmenteile um das Fenster herum befestigbar sind.

Hierzu ist erfindungsgemäß vorgesehen, daß ein aus einem biegsamen, duktilen Metall bestehendes Winkelband (3) Verwendung findet, welches im Querschnitt einen die Außenkante der Scheibe überragenden und gegen die Scheibe (2) gerichteten Schenkel (3a) aufweist, der einen nach außen offenen umlaufenden Kanal (Ausnehmung) zur Aufnahme von Verbindungselementen bildet, die durch ein aus Gumi oder gummiähnlichem Kunststoff bestehendes Dichtungsband (8) von einem der Scheibenfläche zugewandten Innenraum getrennt ist, wobei der Innenraum mit Durchbrüchen (5) zur Einfüllung eines Klebers oder eines klebfähigen Kunststoffes versehen ist, der nach Auflage eines weiteren Schenkels des Winkelbandes unter Zwischenschaltung eines Abstandhalters im Randbereich der Scheibe deren Fläche übergreift, so daß der durch die Durchbrüche in Richtung auf die Scheibenfläche durchtretende Kleber diese im Abstand zu der Durchbruchsebene des Winkelbandes bzw. das Winkelband gegenübe der Scheibe fixiert (2).

## Beschreibung

Die Erfindung betrifft eine Vorrichtung zum Einfassen der Ränder der Fensterscheiben von Kraftfahrzeugen mit einem aus einem elastischen Material bestehenden Rahmen. Bekannte Anordnungen dieser Art bestehen darin, daß der Rahmen, der vorzugsweise aus Polyurethan besteht, um den Rand einer Fensterscheibe für Kraftfahrzeuge herumgespritzt wird und wobei dieses Umspritzen den späteren Rahmen bildet.

Bekannte Rahmen sind als ein aus Gummi oder elastischem Kunststoff bestehendes Profil ausgebildet, welches auf die Kante der Scheibe aufsteckbar ist und zwei einander gegenüberliegende Schenkel aufweist, von denen wenigstens einer mit dem Kantenverlauf entsprechenden Abstand zueinander angeordneten Durchbrüchen versehen ist, durch welche der den Rahmen mit der Scheibe verbindende Kleber in Richtung auf die Fläche der Scheibe austreten kann, um den Rahmen an der Scheibe sicher zu fixieren.

Nachteilig bei dieser bekannten Anordnung ist es, daß der so gebildete Rahmen ein für allemal festgelegt ist und daß Variationen hinsichtlich der Form des Rahmens nur durch grundlegende Änderungen in der Spritzvorrichtung möglich sind. Die Herstellung eines Rahmens durch Spritzen ist darüber hinaus aufwendig und teuer.

Der Erfindung liegt demgemäß die Aufgabe zugrunde, ein Kraftfahrzeugfenster so mit einem umlaufenden Rahmen zu versehen, daß mit ein und derselben Halterung verschiedene Rahmenformen und/oder Rahmenteile um das Fenster herum befestigbar sind, so daß gegebenenfalls die Fenster verschiedener Automobilhersteller mit ein und derselben Rahmengrundlage ausgestattet werden können und dennoch eine Anpassung an das übrige Design des Fahrzeuges möglich bleibt.

Diese Aufgabe wird erfindungsgemäß dadurch gelöst, daß ein vorzugsweise aus einem biegsamen, duktilen Metall und/oder Kunststoff bestehendes Winkelband Verwendung findet, welches im Querschnitt einen die Außenkante der Scheibe überragenden und gegen die Scheibe gerichteten Schenkel aufweist, der einen nach außen offenen umlaufenden Kanal (Ausnehmung) zur Aufnahme von Verbindungselementen bildet, die durch ein aus Gummi oder gummiähnlichem Kunststoff bestehendes Dichtungsband von einem der Scheibenfläche zugewandten Innenraum getrennt ist, wobei der Innenraum mit Durchbrüchen zur Einfüllung eines Klebers oder eines klebfähigen Kunststoffes versehen ist, der nach Auflage eines weiteren Schenkels des Winkelbandes unter Zwischenschaltung eines Abstandhalters im Randbereich der Scheibe deren Fläche übergreift, so daß der durch die Durchbrüche in Richtung auf die Scheibenfläche durchtretende Kleber diese im Abstand zu der Durchbruchsebene des Winkelbandes bzw. das Winkelband gegenüber der Scheibe fixiert.

Mit dieser Anordnung wird erreicht, daß außerhalb des Scheibenrandes ein umlaufender Kanal zur Aufnahme von Verbindungselementen offen bleibt, in welchen insbesondere Halterungen von das optische Bild der Scheibe beeinflussenden Blenden, Halbrahmen usw. einsteckbar sind, wobei diese mit schwalbenschwanz- oder pilzförmigen Klemmelementen versehen sind, die im Abstand zueinander an den Blenden, Halbrahmen usw. angeordnet sind.

Zur Verhinderung des Eintrittes des Klebers in die Ausnehmung hinein ist eine aus Gummi oder gummiähnlichem Kunststoff bestehende Trennwand vorgesehen, die in der Ebene des Dichtbandes wenigstens in zwei Richtungen biegbar ist, so daß das Winkelband mit zwei Freiheitsgraden in der Ebene verlegt werden kann. Bei Scheibenumrandungen ist dieses jedoch nicht erforderlich, da das Umfassen des Scheibenrandes mit einem Rahmen immer in derselben Krümmungsrichtung erfolgt.

Das Winkelband kann mit einem weiteren auf der dem ersten Querschnitt des Bandes gegenüberliegenden Seite des Einsteckkanals liegenden Schenkel versehen sein, der durch die Einstecköffnung hindurch nach außen weist und damit das Winkelband gegenüber dem Scheibenrand vorfixiert. Diese Konfiguration hat insbesondere den Vorteil, daß zur Herstellung der Verbindung des Winkelbandes mit dem Scheibenrand besondere Maßnahmen zur Fixierung von Winkelband und Scheibenrand nicht getroffen werden müssen, weil die beiden einander gegenüberliegenden Schenkel der den Innenraum abschließenden Einstecköffnung gegenüber dem Scheibenrand fixiert werden.

Besonders vorteilhaft ist es aber, wenn im Bereich des umlaufenden Einsteckkanals wenigstens ein zweiter Schenkel vorgesehen ist, der von der Innenseite des Fensters her die Randfläche der Scheibe übergreift, so daß diese von den beiden Schenkeln übergriffen in einer Halterungsnut liegt. Diese Konfiguration führt zu einer besonders guten Festlegung der Scheibe.

Auf diese Weise wird das Winkelband so ausgestaltet, daß es im Querschnitt zwei Einsteckkanäle aufweist, von denen die eine der Halterung der Scheibe und die andere der Halterung von Blenden und dergleichen dient. Damit erfüllt das so ausgestaltete Winkelband die Funktion eines sogenannten Klammerbandes, bei welchem von den Seiten des Klammerbandes her Einschnitte vorgesehen sind, die ein winkelförmiges Aufspreizen während des Herumführens des Klammerbandes um Krümmungen der Scheibe erlaubt. Das Austreten des Klebers aus den so gebildeten Öffnungen in Richtung auf die erste Einsteckungs- und Fixierungsnut wird durch das elastische Gummiband verhindert, welches zwischen zwei einander zugewandten weiteren Schenkeln des Klammerbandes sowie auf der gegenüberliegenden Seite gehaltert ist, so daß es die sich aufspreizenden Öffnungen so weit abdichtet, daß Kleber nicht austreten kann. Dies gilt insbesondere für Kleber mit einer hohen Viskosität.

Die erfindungsgemäße Anordnung ist in besonders einfacher Weise dafür geeignet, vollständig entsorgt zu werden, indem um einen das Dichtband halternden nach innen weisenden Steg ein Draht vor der Verklebung gespannt wird, der bei einer Verschrottung des Fahrzeuges zugezogen wird, so daß er den Kleber in der Ebene der beiden Enden dieser Stege durchschneidet und damit die Fensterhalterung vom Karosserieblech trennt. Nach der Trennung ist der Restkunststoff zusammen mit dem Winkelband bzw. dem Klammerband, sofern das Winkelband als solches ausgebildet ist, leicht entfernbar, wobei evtl. an der Scheibe verbleibende Kleberreste bei deren Einschmelzen auf der Oberfläche der Schmelze schwimmen und zusammen mit anderen Verunreinigungen abgeschöpft werden können.

Bei höheren Temperaturen zersetzen sich außerdem die Kleberreste und die anderen Unreinheiten durch Dampfdruck.

Besonders zweckmäßig ist es, wenn das Winkel- bzw. Klammerband von einer Rolle kommend fortlaufend bearbeitet wird und jeweils im Stoßbereich nach Umhüllung der Scheibe abgeschnitten wird.

Es ist aber auch in vorteilhafter Weise möglich, das Winkelband auf Länge vor der Umhüllung der Scheibe zu schneiden und erst nach dem Schnitt auf die Scheibe aufzubringen.

Da der Stoß bedingt, daß die Enden des Winkelbandes bzw. des Klammerbandes stumpf gegeneinander stoßen, kann zur sicheren Festlegung dieser Enden ein ebenfalls aus Polyurethan oder dergleichen bestehendes Klebeband in die Nut des Winkelbandes bzw. des Klammerbandes eingelegt werden, um die Enden zu fixieren. Große Kräfte brauchen hierbei nicht überwunden zu werden, weil praktisch nur die Spreizkräfte aufzuheben sind. Außerdem werden die Stoßstellen noch dadurch fixiert, daß die Bänder in diesem Bereich an den äußeren Rändern der Glasscheibe anliegen. Dies gilt insbesondere für diejenige Ausführungsform, bei welcher nach Art eines Klammerbandes eine aus den beiden Bändern oder Bandenden gebildete Nut verbleibt.

Die Erfindung wird im folgenden anhand von Ausführungsbeispielen in der Zeichnung näher erläutert.
- Fig. 1: zeigt in perspektivischer Darstellung einen Ausschnitt aus der erfindungsgemäßen Einfassung.
- Fig. 2: ist der Schnitt II-II nach Fig. 1.
- Fig. 3: zeigt eine andere Ausführungsform des Winkelbandes in Draufsicht.

In den Figuren ist mit 1 das Karosserieblech bezeichnet, an welchem die Fensterscheibe befestigt werden soll. Die in horizontaler Lage wiedergegebene Fensterscheibe 2 wird von einem verformbaren Winkelblech 3 gehalten, von welchem ein Schenkel 3a die Fensterscheibe 2 unmittelbar untergreift, während ein Steg 3b als Träger eines Abschlußschenkels 3c dient, wobei zwischen den Schenkeln oder Stegen 3b und 3c eine offene Form 4 gebildet wird, die über Durchbrüche 5 mit einem Innenraum 6 in Verbindung steht.

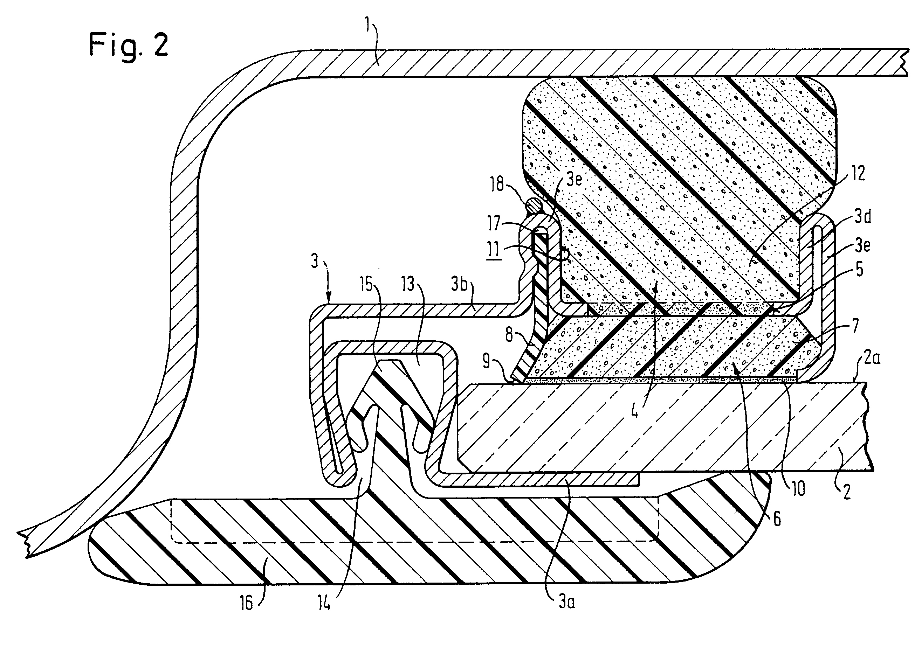

Wie insbesondere aus Fig. 2 hervorgeht, wird der Innenraum 6 mit einer Vergußmasse 7, vorzugsweise aus Polyurethan gefüllt, wobei das Auswerfen der Vergußmasse durch ein Dichtungsband 8, dessen Kante 9 ebenfalls auf der Scheibe 2 aufliegt, verhindert wird.

Die Fensterscheibe 2 ist auf ihrer, der Vergußmasse 7 zugewandten Seite 2a mit einer Klebschicht 10 versehen, auf welcher die Vergußmasse 7 haftet.

Das elastische Dicht band 8 kann aus Gummi oder gummiähnlichem Kunststoff bestehen, so daß eine Anlage der Kante 9 auf der Scheibenseite 2a unter Vorspannung gewährleistet ist.

Nach der Füllung des Innenraumes 6 mit der Vergußmasse wird der oberhalb des Innenraumes 6 liegende Raum 11 ebenfalls mit Polyurethanmasse 12 aufgefüllt, wobei diese Polyurethanschicht über die Durchbrüche 5 eine innige Verbindung mit der jeweils anderen Polyurethanschicht eingeht.

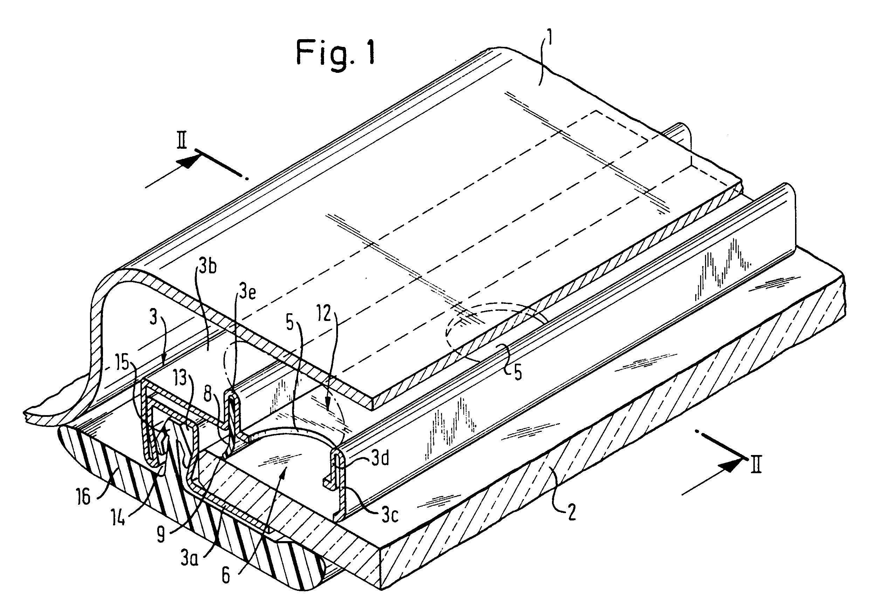

Wie aus den Figuren 1 und 2 hervorgeht, wird das Winkelband 3 beginnend mit der Scheibenauflage 3a in verschiedene zum Teil gegenläufige Winkel gelegt, so daß unmittelbar der Scheibe 2 benachbart ein Eingriffkanal 13 gebildet wird, dessen innerer Durchmesser größer als seine nach außen weisende Öffnung 14 ist, so daß elastische Verbindungselemente 15 die schwalbenschwanz- oder pilzförmig sein können, in den so gebildeten Kanal 13 einknöpfbar sind.

Diese Verbindungselemente 15 können als Träger für Blenden 16 oder dergleichen sowie für Halterungen anderer Art verwendet werden, insbesondere kann damit das Aussehen des Fensters in Abhängigkeit von verschiedenen Kraftfahrzeugformen beeinflußt werden.

Jenseits des Eingriffskanales 13 wird durch entsprechende Umwinkelung ein schmaler Kanal 17 gebildet, zwischen dessen beiden Wandungen das elastische Dichtungsband 8 aufgenommen und gehaltert werden kann. Jenseits dieser Halterung dienen entsprechend umgewinkelte Stege 3c und 3d einerseits zur Aufnahme und Begrenzung des Innenraumes 6 und andererseits als Abstandshalter für diesen Innenraum, um ihn in der beschriebenen Weise mit Polyurethanmasse füllen zu können.

In Fig. 2 ist noch ein Draht 18 zu erkennen, der als zuziehbare Schlaufe die Scheibe 2 von den anschließenden Klebschichten zum Zwecke der Entsorgung in an sich bekannter Weise trennt.

Dieser Draht kann, wie dargestellt, aufgelagert sein; es ist aber auch möglich, in Abweichung von der Darstellung den Draht auf den Schenkel 3c/3c aufzulagern.

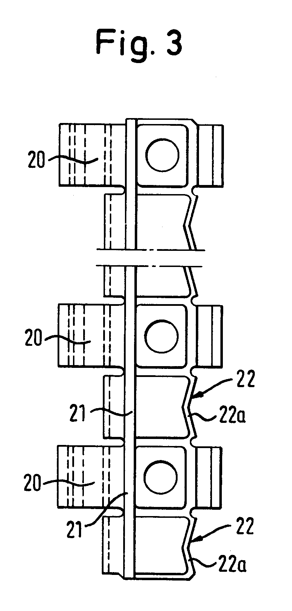

Fig. 3 zeigt eine abgewandelte Ausführungsform des Winkelbandes, welches in Einzelabschnitte 20 aufgeteilt ist, die durch Stege 21 und 22 ineinander verbunden sind. Die Stege 21 liegen, wie dargestellt, mit ihrer Breitseite in Biegerichtung, so daß bei einer Verformung des Bandes um einen bestimmten Radius die auf der Krümmungsinnenseite liegenden Stege 22 eingeknickt werden, während sie auf der Außenseite unverändert bleiben.

Das Winkelband nach Fig. 3 besteht aus einem thermoplastischem Kunststoff, um die Verformung zu erleichtern.

Die auf der Krümmungsinnenseite liegenden Stege 22 weisen im geradlinig verlaufenden Zustand des Bandes eine Voreinknickung 22a auf, die bei der Verformung um kleinere Radien die Einknickung vorgibt.

Wie dargestellt, können die auf der Krümmungsaußenseite des Winkelbandes liegenden Stege 21 einen größeren Querschnitt als die einknickbaren Stege 22 auf der Krümmungsinnenseite haben.

## Patentansprüche

1. Vorrichtung zum Einfassen der Ränder der Fensterscheiben von Kraftfahrzeugen mit einem aus einem elastischen Material bestehenden Rahmen, dadurch gekennzeichnet, daß als Rahmengrundlage ein aus einem biegsamen, duktilen Metall bestehendes Winkelband (3) Verwendung findet, welches im Querschnitt einen die Außenkante der Scheibe (2) überragenden und gegen die Scheibe (2) gerichteten Schenkel (3a) aufweist, der ein nach außen offenen umlaufenden Kanal (13) zur Aufnahme von Verbindungselementen (15) bildet, der durch ein aus Gummi oder gummiähnlichem Kunststoff bestehendes Dichtungsband(8) von einem der Scheibenfläche zugewandten Innenraum (6) getrennt ist, wobei der Innenraum (6) mit Durchbrüchen (5) zur Einfüllung eines Klebers oder eines klebfähigen Kunststoffes versehen ist, der nach Auflage eines weiteren Schenkels (3d) des Winkelbandes (3) unter Zwischenschaltung eines Abstandhalters (3c) im Randbereich der Scheibe (2) deren Fläche übergreift, so daß der durch die Durchbrüche (5) in Richtung auf die Scheibenfläche durchtretende Kleber diese im Abstand zu der Durchbruchsebene des Winkelbandes bzw. das Winkelband (3) gegenüber der Scheibe (2) fixiert.

2. Vorrichtung nach Anspruch 1, dadurch gekennzeichnet, daß in den Kanal das optische Bild der Scheibe beeinflussende Blenden (16), Halbrahmen usw. einsteckbar sind, wobei diese mit schwalbenschwanz- oder pilzförmigen Klemmelementen (15) versehen sind, die im Abstand zueinander an den Blenden (16), angeordnet sind.

3. Vorrichtung nach Anspruch 1 oder 2, dadurch gekennzeichnet, daß zur Verhinderung des Eintrittes des Klebers in den Kanal eine aus Gummi oder gummiähnlichem Kunststoff bestehende Trennwand (8) vorgesehen ist, die in wenigstens zwei Richtungen biegbar ist und als Dichtband ausgeführt ist.

4. Vorrichtung nach einem der vorhergehenden Ansprüche, dadurch gekennzeichnet, daß das Winkelband (3) mit einem weiteren auf der dem Anfangsquerschnitt (3a) des Winkelbandes (3) gegenüberliegenden Seite des Einsteckkanales (13) liegenden Schenkel (3b) versehen ist, der nach außen weist und damit das Winkelband (3) gegenüber dem Scheibenrand vorfixiert.

5. Vorrichtung nach einem der vorhergehenden Ansprüche, dadurch gekennzeichnet, daß im Bereich des umlaufenden Einsteckkanales (13) wenigstens ein zweiter Schenkel vorgesehen ist, der von der Innenseite des Fensters her die Randfläche der Scheibe (2) übergreift, so daß die Scheibe in einer durch die beiden Schenkel gebildeten Halterungsnut liegt.

6. Vorrichtung nach einem der vorhergehenden Ansprüche, dadurch gekennzeichnet, daß um einen das Dichtband (8) halternden nach innen weisenden Steg (3e) vor der Verklebung die Schlaufe eines Drahtes (18) gespannt wird, der bei einer Entsorgung zugezogen wird, so daß er den Kleber durchschneidet und damit die Fensterhalterung vom Karosserieblech trennt.

7. Vorrichtung nach einem der vorhergehenden Ansprüche, dadurch gekennzeichnet, daß das Winkel- oder Klammerband (3) von einer Rolle kommend fortlaufend bearbeitet wird und jeweils im Stoßbereich nach Umhüllung der Scheibe (2) abgeschnitten wird.

8. Vorrichtung nach Anspruch 7, dadurch gekennzeichnet, daß die Enden des Winkelbandes (3) stumpf gegeneinanderstoßen, wobei zur sicheren Festlegung dieser Enden ein aus Polyurethan oder dergleichen bestehendes Klebeband in die Nut des Winkelbandes (3) eingelegt wird.

9. Vorrichtung nach Anspruch 1, dadurch gekennzeichnet, daß die Anpassung an die Biegung durch Einzelabschnitte (20) des Winkelbandes ermöglicht wird, die nur durch in senkrechten Parallelebenen liegende flache Stege (21,22) miteinander verbunden sind, die mit ihrer Breitseite in Biegerichtung liegen, so daß bei einer Verformung des Winkelbandes um einen bestimmten Radius die auf der Krümmungsinnenseite liegenden Stege (22) eingeknickt werden, während sie auf der Krümmungsaußenseite unverändert bleiben.

10. Vorrichtung nach Anspruch 9, dadurch gekennzeichnet, daß das Winkelband aus einem thermoplastischem Kunststoff besteht.

11. Vorrichtung nach Anspruch 9 oder 10, dadurch gekennzeichnet, daß die Stege (22) auf der Krümmungsinnenseite so ausgebildet sind, daß sie im geradlinig verlaufenden Zustand des Winkelbandes eine Voreinknickung (22a) aufweisen, die bei der Verformung um kleiner Radien die Art der Einknickung vorgibt.

12. Vorrichtung nach einem der Ansprüche 9 bis 11, dadurch gekennzeichnet, daß auf der Krümmungsaußenseite des Winkelbandes in diesem Bereich der Querschnitt der Stege (20) größer als derjenige auf der Krümmungsinnenseite ist.
